# DEMANDE DE BREVET EUROPEEN

(11) **EP 3 324 091 A1**
(43) Date de publication de la demande: **23.05.2018**
(21) Numéro de dépôt: 17200130.7
(22) Date de dépôt: 06.11.2017
(51) Int. Cl.: F16L 9/22, F16L 11/18, F16L 27/08

(54) **DISPOSITIF DE RACCORDEMENT POUR ACHEMINER UN FLUIDE, ET PROCEDES D'UTILISATION ET DE REMPLISSAGE S'Y RAPPORTANT**

(30) Priorité: 16.11.2016 FR 1661086
(71) Demandeur: Service Industrie Sante Novam, 94460 Valenton (FR)
(72) Inventeur: MARAS, Sevan, 94450 Limeil-Brevannes (FR); REAUX, Christophe, 94450 Limeil-Brevannes (FR); PIERRE, Mathieu, 78180 Montigny Le Bretonneux (FR)
(74) Mandataire: Pontet Allano & Associes

(57) **Abrégé**

La présente invention se rapporte au domaine du transport de fluide sous haute pression, typiquement du gaz sous pression supérieure à 10 MPa. Elle concerne en particulier un dispositif de raccordement (1) agencé pour acheminer du fluide d'une borne de distribution à une borne de remplissage, ce dispositif comprenant des conduits (101-106) rigides et des éléments de liaison (11-15) agencés de sorte que chacun desdits éléments de liaison relie deux desdits conduits selon une liaison pivot. La présente invention concerne aussi un procédé d'utilisation d'un tel dispositif ainsi qu'un procédé de remplissage d'un récipient mettant en oeuvre un tel dispositif.

## Description

### Domaine technique

La présente invention se rapporte au domaine du transport de fluide sous haute pression, typiquement du gaz sous pression supérieure à 10 MPa.

Plus spécifiquement, la présente invention concerne un dispositif de raccordement d'une borne de distribution à une borne de remplissage pour acheminer un fluide tel que du gaz entre ces deux bornes, dans des contextes où la position relative de ces bornes peut varier d'une utilisation ou d'une installation à une autre.

La présente invention concerne aussi un procédé d'utilisation d'un tel dispositif ainsi qu'un procédé de remplissage d'un récipient mettant en oeuvre un tel dispositif.

### État de la technique antérieure

Dans l'industrie gazière, on connaît au moins deux types de systèmes pour remplir des bouteilles avec du gaz sous haute pression.

Dans un premier type de systèmes de remplissage dits à cadre, on alimente en gaz un réseau de remplissage agencé pour répartir le gaz dans des bouteilles placées dans un châssis. Typiquement, le gaz entre dans le réseau de remplissage par une borne de remplissage qui est fixe relativement au châssis. Pour alimenter le cadre, on prélève typiquement du gaz dans un réseau de distribution depuis une borne de distribution. Dans ce premier type de systèmes, la borne de distribution du réseau est généralement fixe tandis que la borne de remplissage du cadre dépend de la disposition spatiale du cadre, ce dernier étant mobile.

Dans un deuxième type de systèmes de remplissage dits à rampe mobile, on alimente en gaz une rampe de remplissage agencée pour répartir le gaz dans des bouteilles. Typiquement, les bouteilles sont placées dans un châssis par un opérateur qui relie manuellement l'entrée des bouteilles à la rampe. Le gaz entre dans la rampe par une borne de remplissage qui est mobile relativement au châssis. Dans ce deuxième type de systèmes, la borne de distribution, par laquelle on prélève du gaz du réseau de distribution, est fixe relativement au châssis. La rampe est typiquement déplacée suivant un mouvement de translation de manière à permettre de connecter aisément la rampe aux bouteilles.

Dans ces différents types de systèmes, on utilise en général des tuyaux souples, aussi appelés flexibles, pour acheminer le gaz de la borne de distribution à la borne de remplissage. À titre d'exemple non limitatif, on peut par exemple utiliser des tuyaux commercialisés par la société SISNOVAM sous l'une des références suivantes :
- Pour le premier type de systèmes : référence « PR01 0086 » ou « PR01 0087 » ;
- Pour le deuxième type de systèmes : référence « PR01 0089 » ou « PR01 0090 ».

La souplesse de tels flexibles leur permet d'être déformés afin de raccorder les bornes de distribution et de remplissage selon différentes positions relatives de ces bornes.

Selon les préconisations de la société SISNOVAM, de tels tuyaux souples sont capables de supporter des pressions élevées, en particulier une pression de service de 25 MPa.

Un inconvénient de tels tuyaux souples résulte du compromis qu'il est nécessaire d'établir entre, d'une part, la souplesse des tuyaux, déterminée notamment par leur épaisseur, et, d'autre part, le débit et la pression de gaz admissibles.

Un autre inconvénient que rencontrent les gaziers utilisant de tels tuyaux souples concerne le remplacement régulier de ceux-ci rendu nécessaire par les risques de rupture sous l'effet de l'usure.

De plus, les tuyaux souples peuvent rompre ou se déchirer, ce qui nécessite généralement l'installation d'un dispositif de sécurité composé d'un câble anti-fouet.

Les tuyaux souples peuvent aussi être accidentellement écrasés, ce qui peut altérer leurs performances ou les mettre hors d'usage.

L'utilisation de tuyaux souples est donc relativement coûteuse et implique de réaliser des opérations de maintenance préventive rigoureuses avec remplacement régulier des tuyaux.

Un but de l'invention est de remédier à ces inconvénients en proposant un dispositif de raccordement de bornes de distribution et de remplissage permettant notamment :
- de limiter les coûts de maintenance préventive, et/ou
- d'optimiser le rapport entre, d'une part, l'adaptabilité de ce dispositif à différentes positions relatives de ces bornes et, d'autre part, le débit et la pression de gaz admissibles, et/ou
- de limiter les risques de rupture, et/ou
- d'améliorer la robustesse du dispositif de raccordement.

### Exposé de l'invention

À cet effet, l'invention propose un dispositif de raccordement destiné à raccorder une borne de distribution de fluide et une borne de remplissage, ce dispositif étant agencé pour acheminer du fluide de la borne de distribution à la borne de remplissage, ce dispositif comprenant des conduits et au moins trois éléments de liaison agencés de sorte que chacun desdits éléments de liaison relie deux desdits conduits selon une liaison pivot ou rotule.

Par l'expression « liaison pivot », on entend dans le présent document une liaison mécanique comprenant un unique degré de liberté en rotation et zéro degré de liberté en translation.

Par l'expression « liaison rotule », on entend dans le présent document une liaison mécanique comprenant trois degrés de liberté en rotation et zéro degré de liberté en translation.

Chaque conduit est de préférence un élément de tuyauterie ne pouvant pas être déformé aisément par un utilisateur du dispositif, en particulier lorsque cet utilisateur raccorde avec ce dispositif la borne de distribution et la borne de remplissage.

Chaque conduit est de préférence un conduit rigide.

Un tel conduit rigide peut se distinguer d'un tuyau souple :
- en ce qu'il ne peut pas être déformé manuellement, et/ou
- en ce qu'il conserve à lui seul - sans aide extérieure d'un utilisateur ou d'une autre pièce ou couche - sa forme sous son propre poids quelle que soit son orientation ou sa position, contrairement au tuyau souple qui peut prendre une forme différente, notamment lors de sa mise en place dans une installation gazière.

Pour ce faire, chaque conduit peut de préférence :
- être en métal. Par exemple, chaque conduit peut être composé d'acier inoxydable austénitique, ou d'alliage de cuivre, ou encore d'alliage de nickel, typiquement Monel® ; et/ou
- avoir une section circulaire ; et/ou
- avoir un diamètre extérieur supérieur ou égal à 6 mm ; et/ou
- avoir une épaisseur supérieure ou égale à 0,7 mm ; et/ou
- avoir un rapport e/d supérieur ou égal à 0,11, avec e l'épaisseur d'un conduit considéré et d le diamètre extérieur de ce même conduit ; et/ou
- présenter un module d'élasticité supérieur ou égal à 90 GPa.

De préférence, chaque conduit consiste en une pièce unique et ne comprend donc pas par exemple de conduit tressé ou un assemblage d'anneaux. Chaque conduit peut être ou ne pas être entouré ou accompagné d'autres pièces ou couches.

La rigidité des conduits améliore la robustesse du dispositif de raccordement selon l'invention et limite les risques de rupture ou de déformation par écrasement, ce qui permet de limiter les coûts de maintenance préventive. De plus, par comparaison avec des tuyaux souples, des conduits rigides permettent de s'affranchir de câbles anti-fouet.

En outre, une telle combinaison de conduits et d'éléments de liaison permet de raccorder une borne de distribution et une borne de remplissage selon différentes positions relatives de ces bornes tout en autorisant des niveaux de débit ou de pression supérieurs comparativement aux tuyaux souples de l'état de la technique antérieure.

De préférence, chacun desdits éléments de liaison peut constituer une liaison pivot, autrement dit une liaison mécanique comprenant un et un seul degré de liberté en rotation et zéro degré de liberté en translation.

Le dispositif peut de préférence être agencé pour acheminer du fluide sous pression supérieure à 10 MPa, de préférence supérieure à 15 MPa.

De préférence, le fluide peut être du gaz.

De préférence, le dispositif peut comprendre au moins quatre éléments de liaison agencés de sorte que chacun desdits éléments de liaison relie deux desdits conduits, plus préférentiellement au moins cinq éléments de liaison agencés de sorte que chacun desdits éléments de liaison relie deux desdits conduits.

Selon une première variante de l'invention, le dispositif peut comprendre, dans au moins une position des éléments de liaisons et des conduits :
- un premier groupe de liaison comprenant au moins un élément de liaison (de préférence au moins deux éléments de liaison), chaque élément de liaison dudit premier groupe reliant deux desdits conduits selon une liaison pivot d'axe parallèle à une première direction ;
- un deuxième groupe de liaison comprenant au moins deux éléments de liaison (de préférence au moins trois éléments de liaison), chaque élément de liaison dudit deuxième groupe reliant deux desdits conduits selon une liaison pivot d'axe parallèle à une deuxième direction,
la deuxième direction étant non parallèle à la première direction, la deuxième direction étant de préférence orthogonale à la première direction.

Par rapport à un dispositif qui ne comprendrait qu'un seul groupe de liaison dont les axes des éléments de liaison seraient tous parallèles entre eux, la présence d'un deuxième groupe de liaison dans lequel les axes des éléments de liaison ne sont pas parallèles à ou aux axes du ou des éléments de liaison d'un premier groupe, au moins dans une position des éléments de liaison et des conduits, permet d'augmenter le nombre de degrés de libertés dans lequel le dispositif peut être déployé. Ainsi, à titre d'exemple, lorsque le dispositif est raccordé à la borne de distribution fixe, la partie du dispositif destinée à être raccordée à la borne de remplissage peut être déplacée dans toutes les directions de l'espace jusqu'à atteindre la borne de remplissage pour raccorder le dispositif à celle-ci, sous réserve de dimensions et d'un agencement appropriés des éléments de liaison et des conduits.

Dans un mode de réalisation de l'invention, en particulier conforme à la première variante, le premier groupe de liaison peut comprendre, dans au moins une position des éléments de liaisons et des conduits, deux éléments de liaison reliant chacun deux desdits conduits selon une liaison pivot d'axe parallèle à ladite première direction et le deuxième groupe de liaison peut comprendre, dans cette même position, trois éléments de liaison reliant chacun deux desdits conduits selon une liaison pivot d'axe parallèle à ladite deuxième direction.

Par exemple, le dispositif peut comprendre respectivement, depuis une entrée destinée à être connectée à ladite borne de distribution jusqu'à une sortie destinée à être connectée à ladite borne de remplissage :
- un premier conduit ; puis
- un premier élément de liaison appartenant au deuxième groupe de liaison ; puis
- un deuxième conduit ; puis
- un deuxième élément de liaison appartenant au deuxième groupe de liaison ; puis
- un troisième conduit ; puis
- un troisième élément de liaison appartenant au premier groupe de liaison ; puis
- un quatrième conduit ; puis
- un quatrième élément de liaison appartenant au premier groupe de liaison ; puis
- un cinquième conduit ; puis
- un cinquième élément de liaison appartenant au deuxième groupe de liaison ; puis
- un sixième conduit.

Selon une deuxième variante de l'invention, le dispositif peut comprendre trois éléments de liaison agencés de sorte que chacun desdits éléments de liaison relie deux desdits conduits.

Dans un mode de réalisation de l'invention, de préférence conforme à la deuxième variante, chacun des éléments de liaison peut relier deux desdits conduits selon une liaison pivot d'axe parallèle à l'axe de la liaison des autres éléments de liaison.

Une telle combinaison des éléments de liaison et des conduits est particulièrement adaptée à des systèmes comprenant typiquement une rampe de remplissage mobile en translation suivant un axe de translation.

Dans un mode de réalisation de l'invention, le dispositif peut comprendre une rampe de remplissage apte à être reliée à au moins un récipient et apte à acheminer du fluide dans ledit au moins un récipient depuis la borne de remplissage, la borne de remplissage pouvant être solidaire de la rampe de remplissage.

De préférence, la rampe de remplissage peut être mobile suivant un axe perpendiculaire à l'axe respectif défini par chacun des éléments de liaison, de préférence pour un dispositif selon la deuxième variante de l'invention.

Chaque conduit peut comprendre deux extrémités et une partie centrale, et, pour chacun des conduits, chaque extrémité reliée à un élément de liaison peut s'étendre suivant une direction perpendiculaire à la direction suivant laquelle s'étend la partie centrale.

Un tel agencement des conduits limite l'encombrement du dispositif, facilite l'articulation des conduits les uns par rapport aux autres et confère au dispositif une mobilité relative de ses conduits apte à optimiser le déplacement de la sortie par rapport à l'entrée notamment en termes d'ampleur.

Selon un autre aspect, l'invention concerne aussi un procédé d'utilisation d'un dispositif selon l'invention, ce procédé comprenant une étape dans laquelle on achemine dans ce dispositif selon l'invention du fluide, de préférence sous pression supérieure à 10 MPa, de préférence supérieure à 15 MPa.

De préférence, le fluide peut être du gaz.

Selon encore un autre aspect, l'invention concerne aussi un procédé de remplissage d'au moins un récipient mettant en oeuvre un dispositif selon l'invention.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue en perspective d'un dispositif de raccordement suivant une première variante de dispositif selon l'invention ;
- la figure 2 est une vue en perspective d'une partie du dispositif de la figure 1 ;
- la figure 3 est une vue en perspective d'un élément de liaison suivant un premier mode de réalisation de l'invention, pour la première ou deuxième variante de dispositif selon l'invention ;
- la figure 4 est une vue en perspective d'un élément de liaison suivant un deuxième mode de réalisation de l'invention, pour la première ou deuxième variante de dispositif selon l'invention ;
- la figure 5 est une vue en perspective d'un premier système de remplissage équipé du dispositif de la figure 1, le système de remplissage comprenant un cadre de remplissage montré dans une première configuration spatiale ;
- la figure 6 est une vue en perspective du système de la figure 5, le cadre de remplissage étant montré dans une deuxième configuration spatiale ;
- la figure 7 est une vue en perspective du système de la figure 5, le cadre de remplissage étant montré dans une troisième configuration spatiale ;
- la figure 8 est une vue en perspective du système de la figure 5, le cadre de remplissage étant montré dans une quatrième configuration spatiale ;
- la figure 9 est une vue du dessus du système selon la figure 8 ;
- la figure 10 est une vue en perspective d'un deuxième système de remplissage équipé du dispositif de la figure 11, ce système comprenant une rampe mobile montrée dans une première configuration spatiale ;
- la figure 11 est une vue en perspective d'un dispositif de raccordement suivant une deuxième variante de dispositif selon l'invention ;
- la figure 12 est une vue de face du système de la figure 10, la rampe mobile étant montrée dans la première configuration spatiale ;
- la figure 13 est une vue de face du système de la figure 10, la rampe mobile étant montrée dans une deuxième configuration spatiale ;
- la figure 14 est une vue de côté du système de la figure 10, la rampe mobile étant montrée dans la première configuration spatiale ;
- la figure 15 est une vue de côté du système de la figure 10, la rampe mobile étant montrée dans la deuxième configuration spatiale.

Les modes de réalisation décrits ci-après étant nullement limitatifs, on pourra notamment considérer des variantes de l'invention ne comprenant qu'une sélection de caractéristiques décrites, isolées des autres caractéristiques décrites - même si cette sélection est isolée au sein d'une phrase comprenant ces autres caractéristiques -, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

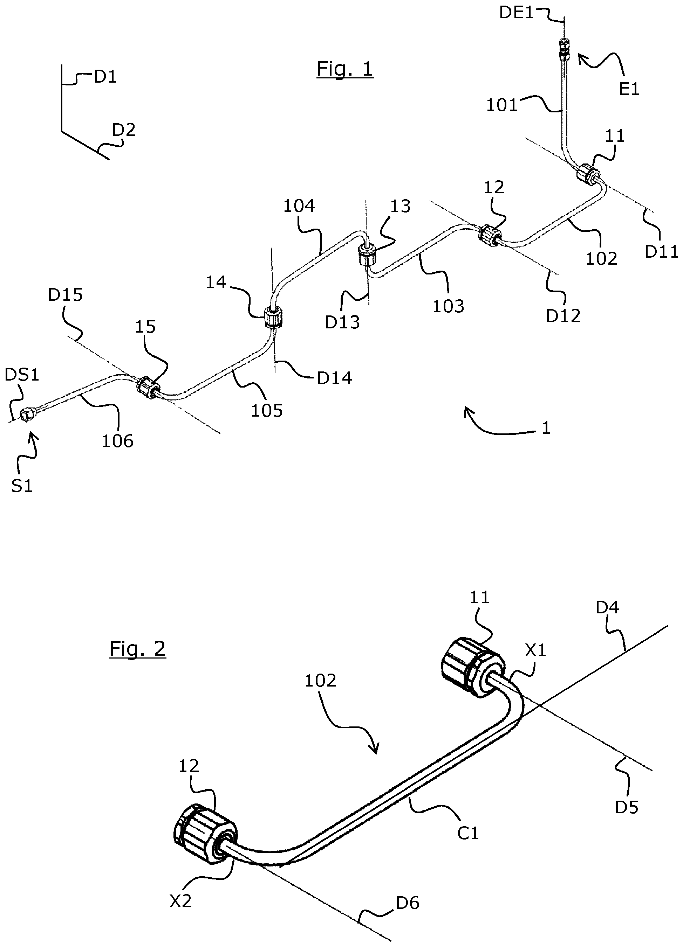

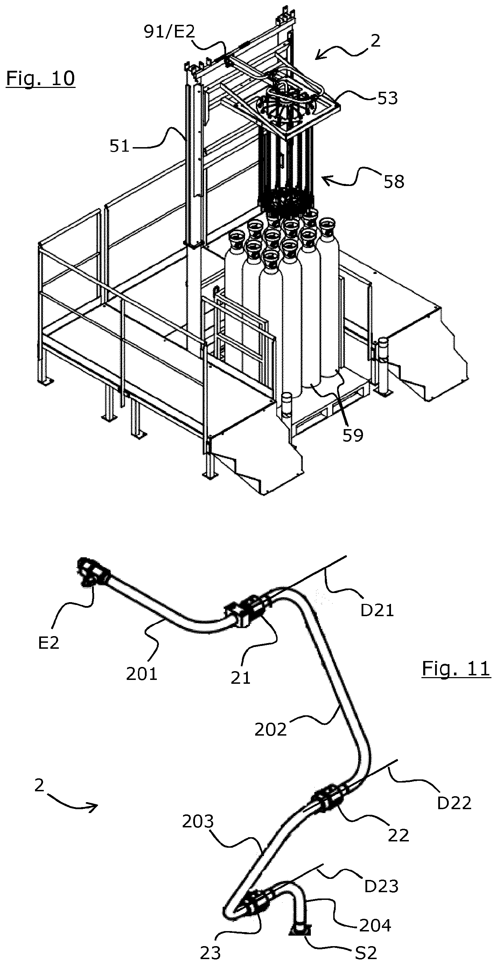

Les figures 1 et 11 montrent deux variantes respectives d'un dispositif de raccordement selon l'invention.

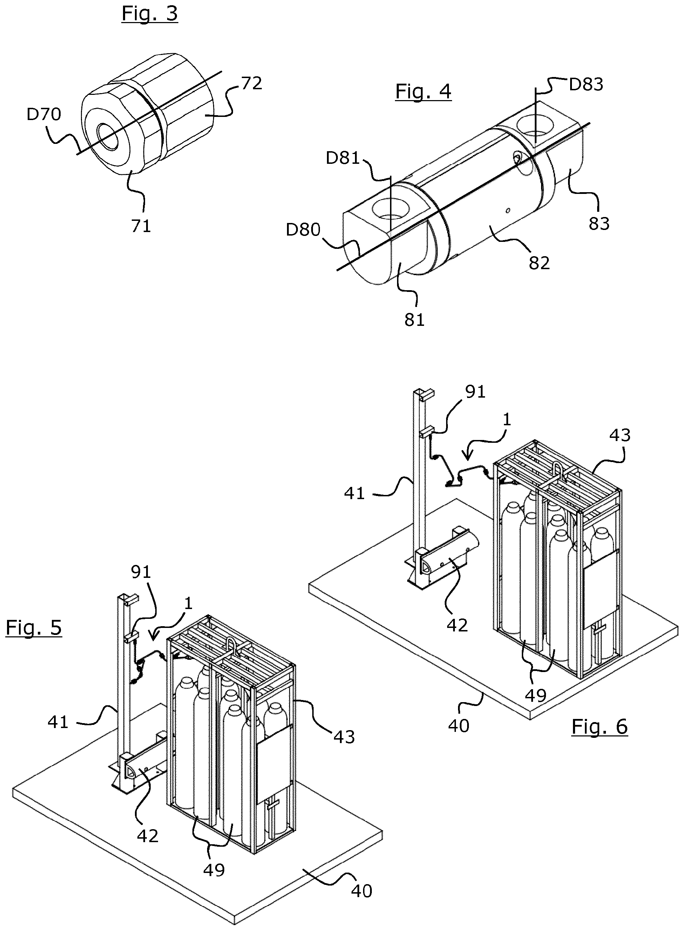

Les figures 5 à 9 illustrent un exemple d'un premier système de remplissage dans lequel est monté le dispositif de raccordement 1 de la figure 1.

Les figures 10 et 12 à 15 illustrent un exemple d'un deuxième système de remplissage dans lequel est monté le dispositif de raccordement 2 de la figure 11.

### Première variante de dispositif selon l'invention et exemple de mise en oeuvre

On va maintenant décrire une première variante du dispositif selon l'invention et un exemple non limitatif de mise en oeuvre, en référence au dispositif de raccordement 1 de la figure 1 et au premier système de remplissage (figures 5 à 9).

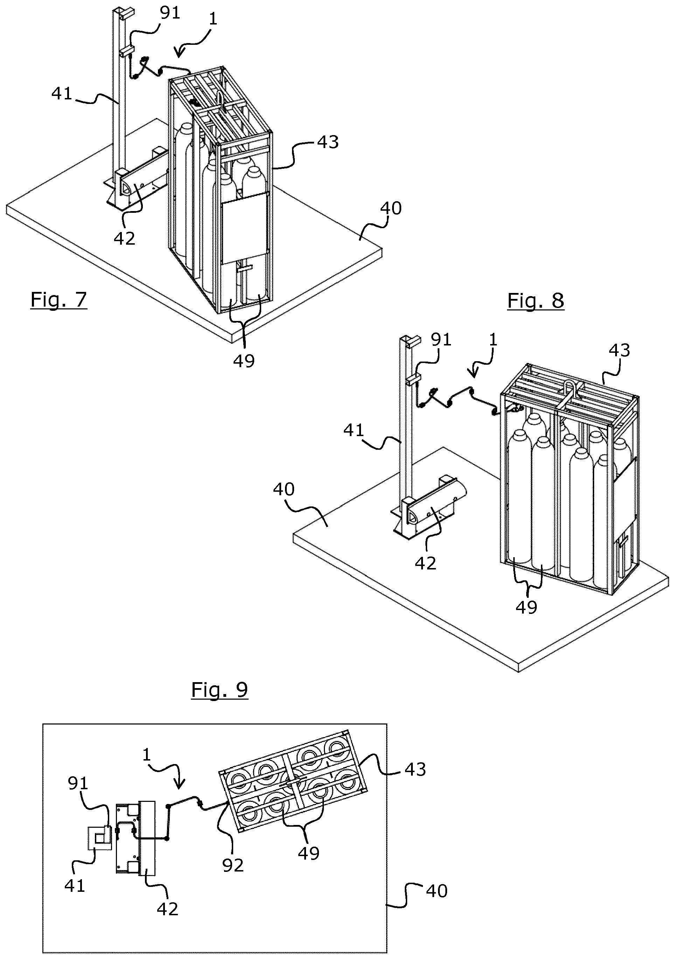

Le dispositif 1 selon l'invention est destiné à raccorder une borne de distribution 91 de fluide et une borne de remplissage 92 (figure 9).

Le dispositif de raccordement 1 comprend une entrée E1 destinée à être connectée à une borne de distribution 91 et une sortie S1 destinée à être connectée à une borne de remplissage 92.

Dans le premier système de remplissage, le dispositif de raccordement 1 est raccordé :
- d'une part, à la borne de distribution 91 par son entrée E1. La borne de distribution 91 consiste en une sortie d'un réseau de distribution 41. La borne de distribution 91 est fixe relativement à un sol 40 et relativement au réseau de distribution 41 ;
- d'autre part, à la borne de remplissage 92 par sa sortie S1. La borne de remplissage 92 est fixe relativement à un cadre 43. Le cadre 43 est mobile relativement au sol 40.

Le dispositif de raccordement 1 est agencé pour acheminer du fluide de la borne de distribution 91 à la borne de remplissage 92.

Dans cet exemple, le fluide est du gaz sous pression supérieure à 10 MPa, de préférence supérieure à 15 MPa.

Plus particulièrement, la borne de remplissage 92 est agencée pour remplir un réseau de remplissage (non représenté) du cadre 43. Des bouteilles 49 sont placées dans un châssis du cadre 43 (le châssis et le cadre sont tous deux désignés par la référence 43 aux figures 5 à 9). Le réseau de remplissage (non représenté) est connecté aux bouteilles 49.

Cet agencement permet de remplir les bouteilles 49 avec le gaz acheminé par le dispositif de raccordement 1.

En référence à la figure 1, le dispositif de raccordement 1 comprend des conduits 101-106 de section circulaire.

Ces conduits 101-106 sont rigides.

La rigidité des conduits 101-106 peut être obtenue par leur fabrication dans un matériau métallique. On pourra par exemple utiliser de l'acier inoxydable austénitique, ou un alliage de cuivre, ou encore un alliage de nickel, typiquement Monel®.

Le dispositif de raccordement 1 comprend aussi des éléments de liaison 11-15, généralement au moins trois, agencés de sorte que chacun desdits éléments de liaison relie deux desdits conduits selon une liaison pivot ou rotule. Dans l'exemple de la figure 1, tous les éléments de liaison 11-15 forment chacun une liaison pivot.

On voit en figure 1 que le dispositif de raccordement 1 comprend deux groupes de liaison caractérisés par la direction des axes des éléments de liaison respectifs.

Le premier groupe de liaison comprend généralement au moins un élément de liaison. Dans l'exemple de la figure 1, il comprend les éléments de liaison 13 et 14. Dans ce premier groupe de liaison, les éléments de liaison 13 et 14 relient chacun deux desdits conduits selon une liaison pivot d'axe parallèle à une première direction D1. En particulier, dans au moins une position des éléments de liaisons et des conduits (plus précisément dans la position « d'extension maximale » illustrée sur la figure 1) :
- l'élément de liaison 13 relie les conduits 103 et 104 selon une liaison pivot d'axe D13 parallèle à ladite première direction D1 ;
- l'élément de liaison 14 relie les conduits 104 et 105 selon une liaison pivot d'axe D14 parallèle à ladite première direction D1.

Le deuxième groupe de liaison comprend généralement au moins deux éléments de liaison. Dans l'exemple de la figure 1, il comprend les éléments de liaison 11, 12 et 15. Dans ce deuxième groupe de liaison, les éléments de liaison 11, 12 et 15 relient chacun deux desdits conduits selon une liaison pivot d'axe parallèle à une deuxième direction D2. En particulier, dans au moins une position des éléments de liaisons et des conduits (plus précisément dans la position « d'extension maximale » illustrée sur la figure 1) :
- l'élément de liaison 11 relie les conduits 101 et 102 selon une liaison pivot d'axe D11 parallèle à ladite deuxième direction D2 ;
- l'élément de liaison 12 relie les conduits 102 et 103 selon une liaison pivot d'axe D12 parallèle à ladite deuxième direction D2 ;
- l'élément de liaison 15 relie les conduits 105 et 106 selon une liaison pivot d'axe D15 parallèle à ladite deuxième direction D2.

On voit dans l'exemple de la figure 1 que la deuxième direction D2 est non parallèle à la première direction D1 et, plus précisément, que la deuxième direction D2 est orthogonale à la première direction D1.

Dans la position « d'extension maximale » illustrée sur la figure 1, ce dispositif est en extension maximale au sens où le premier pivot 11 et le dernier pivot 15 de ce dispositif 1 sont maximalement éloignés l'un par rapport à l'autre.

Dans l'exemple de la figure 1, le dispositif 1 comprend respectivement, depuis l'entrée E1 jusqu'à la sortie S1 :
- un premier conduit 101 ; puis
- un premier élément de liaison 11 appartenant au deuxième groupe de liaison ; puis
- un deuxième conduit 102 ; puis
- un deuxième élément de liaison 12 appartenant au deuxième groupe de liaison ; puis
- un troisième conduit 103 ; puis
- un troisième élément de liaison 13 appartenant au premier groupe de liaison ; puis
- un quatrième conduit 104 ; puis
- un quatrième élément de liaison 14 appartenant au premier groupe de liaison ; puis
- un cinquième conduit 105 ; puis
- un cinquième élément de liaison 15 appartenant au deuxième groupe de liaison ; puis
- un sixième conduit 106.

La figure 2 est un agrandissement d'une partie du dispositif de la figure 1, en particulier du conduit 102 et des éléments de liaison 11 et 12.

On voit que ce conduit 102 comprend deux extrémités X1 et X2 et une partie centrale C1. La partie centrale C1 s'étend suivant une direction D4. L'extrémité X1 reliée à l'élément de liaison 11 s'étend suivant une direction D5 perpendiculaire à la direction D4. De même, l'extrémité X2 reliée à l'élément de liaison 12 s'étend suivant une direction D6 perpendiculaire à la direction D4.

Il en va de même pour chacun des conduits 101-106 du dispositif de raccordement 1, c'est-à-dire que chaque extrémité de conduit reliée à un élément de liaison s'étend suivant une direction perpendiculaire à la direction suivant laquelle s'étend une partie centrale de ce conduit. Avantageusement :
- certains conduits comprennent chacun deux extrémités qui s'étendent chacune suivant une direction parallèle l'une par rapport à l'autre, définissant un conduit en forme de « C » - tel est le cas des conduits 102 et 104 ;
- certains conduits comprennent chacun deux extrémités qui s'étendent chacune suivant une direction perpendiculaire l'une par rapport à l'autre, définissant un conduit en forme de double « L » (un L dans un premier plan et un L dans un deuxième plan perpendiculaire au premier plan) - tel est le cas des conduits 103 et 105.

De cette façon, chaque extrémité de conduit reliée à un élément de liaison forme un coude. Suivant l'agencement de la figure 1, cela confère au dispositif 1 une mobilité relative de ses conduits apte à optimiser le déplacement de la sortie S1 par rapport à l'entrée E1 notamment en termes d'ampleur.

L'extrémité E1 du conduit 101, qui n'est pas reliée à un élément de liaison mais qui est destinée à être connectée à la borne d'alimentation 91, s'étend de préférence dans une direction DE1 parallèle à la direction dans laquelle s'étend une partie centrale de ce conduit 101. Cette extrémité E1 comporte un élément d'accouplement du dispositif 1 à la borne de distribution 91.

De même, l'extrémité S1 du conduit 106, qui n'est pas reliée à un élément de liaison mais qui est destinée à être connectée à la borne de remplissage 92, s'étend de préférence dans une direction DS1 parallèle à la direction dans laquelle s'étend une partie centrale de ce conduit 106. Cette extrémité S1 comporte un élément d'accouplement du dispositif 1 à la borne de remplissage 92.

Dans l'exemple qui vient d'être décrit, chacun des éléments de liaison 11-15 constitue une liaison pivot. Alternativement, chacun des éléments de liaison, ou une partie seulement d'entre eux, pourrait constituer une liaison rotule. Toutefois, il est plus avantageux que chaque élément de liaison constitue une liaison pivot car une liaison pivot assure une meilleure étanchéité et robustesse qu'une liaison rotule.

En guise d'élément de liaison 11-15, on peut par exemple utiliser un élément de liaison de type pivot tel qu'illustré en figure 3 ou 4.

L'élément de liaison de la figure 3 comprend deux éléments de raccord 71 et 72. Cet élément de liaison est agencé de sorte que ces deux éléments de raccord 71 et 72 soient mobiles l'un par rapport à l'autre autour d'un axe de rotation D70. Chaque élément de raccord est apte à recevoir et maintenir une extrémité d'un conduit 101-106.

La coaxialité des éléments de raccord 71 et 72 de l'élément de liaison de la figure 3 entraîne la conséquence suivante : la direction dans laquelle s'étend l'extrémité d'un conduit reçue dans l'élément de raccord 71 est identique à la direction dans laquelle s'étend l'extrémité d'un conduit reçue dans l'élément de raccord 72. Ainsi, il est nécessaire d'utiliser des conduits présentant des coudes tels que montré en figure 1 et 2 pour parvenir à un dispositif 1 apte à raccorder des bornes de distribution 91 et de remplissage 92 selon différentes positions relatives de ces bornes.

Le dispositif de raccordement 1 de la figure 1 comprend des éléments de liaison 11-15 conformes à l'élément de liaison de la figure 3.

Un autre exemple d'élément de liaison est montré en figure 4. Dans cet autre exemple, l'élément de liaison comprend deux éléments de raccord 81 et 83 et un élément central 82. Cet élément de liaison est agencé de sorte que ces deux éléments de raccord 81 et 83 soient chacun mobile par rapport à l'élément central 82 autour d'un axe de rotation D80. Chaque élément de raccord est apte à recevoir et maintenir une extrémité d'un conduit de sorte que cette extrémité s'étende suivant une direction D81 ou D83 perpendiculaire à l'axe de rotation D80.

Contrairement à l'élément de liaison de la figure 3, celui de la figure 4 peut permettre de limiter ou d'annuler le nombre de coudes dans les conduits : une telle variante de réalisation du dispositif de raccordement n'est pas représentée dans les dessins.

En outre, l'élément de liaison de la figure 4 permet de recevoir un conduit, via l'élément de raccord 81 ou 83, sans faire passer le conduit à travers un écrou. Dans l'élément de liaison de la figure 3, le conduit passe à travers un écrou constitué par l'élément de raccord 72. Ainsi, l'utilisation d'un élément de liaison selon la figure 4 peut conférer une plus grande compacité au dispositif, par comparaison avec l'utilisation d'un élément de liaison selon la figure 3.

On va maintenant brièvement décrire un exemple de mise en oeuvre du dispositif de raccordement 1 dans le premier système de remplissage selon les figures 5-9.

Typiquement, le dispositif de raccordement 1 est initialement désolidarisé du cadre 43 et l'élément d'accouplement de la sortie S1 est vissé sur un support bouchon solidaire du réseau de distribution 41 (non représenté). L'entrée E1 est connectée à la borne de distribution 91.

On dévisse tout d'abord l'élément d'accouplement de la sortie S1 dudit support bouchon (non représenté).

On positionne ensuite le cadre 43 à une distance relativement proche de la borne de distribution 91, par exemple selon l'une quelconque des configurations des figures 5-8.

De préférence, le système comprend un butoir 42 afin de protéger le réseau 41 et/ou la borne 91 de distribution lors de la manoeuvre du cadre 43.

On approche ensuite la sortie S1 vers la borne de remplissage 92, en utilisant les degrés de liberté conférés par les éléments de liaison 11-15. On doit en particulier veiller à faire concorder l'axe DS1 avec l'axe de connexion de la borne de remplissage 92 (non représenté).

On connecte ensuite le dispositif de raccordement 1 à la borne de remplissage 92 par l'élément d'accouplement de la sortie S1.

On achemine ensuite dans le dispositif 1 du fluide, typiquement et dans cet exemple du gaz sous pression supérieure à 10 MPa, de préférence supérieure à 15 MPa, afin de remplir les bouteilles 49.

On voit ici que la mobilité du dispositif de raccordement 1 permet de raccorder la borne de distribution 91 et la borne de remplissage 92 selon de nombreuses configurations de disposition du châssis 43, par exemple :
- cadre 43 relativement rapproché (figure 5) ou relativement éloigné (figure 6) du réseau de distribution 41 ;
- cadre 43 aligné (figures 5 et 6) ou désaxé (figures 7 à 9) par rapport au réseau de distribution 41.

### Deuxième variante de dispositif et exemple de mise en oeuvre

On va maintenant décrire une deuxième variante du dispositif selon l'invention et un exemple non limitatif de mise en oeuvre, en référence au dispositif de raccordement 2 de la figure 11 et au deuxième système de remplissage (figures 10 et 12-15). Ce deuxième mode de réalisation de dispositif de raccordement 2 selon l'invention sera décrit pour ses différences par rapport au premier mode de réalisation de dispositif 1 précédemment décrit, certaines caractéristiques communes (notamment les formes et structures possibles des conduits et des éléments de liaisons) n'étant pas de nouveau décrites.

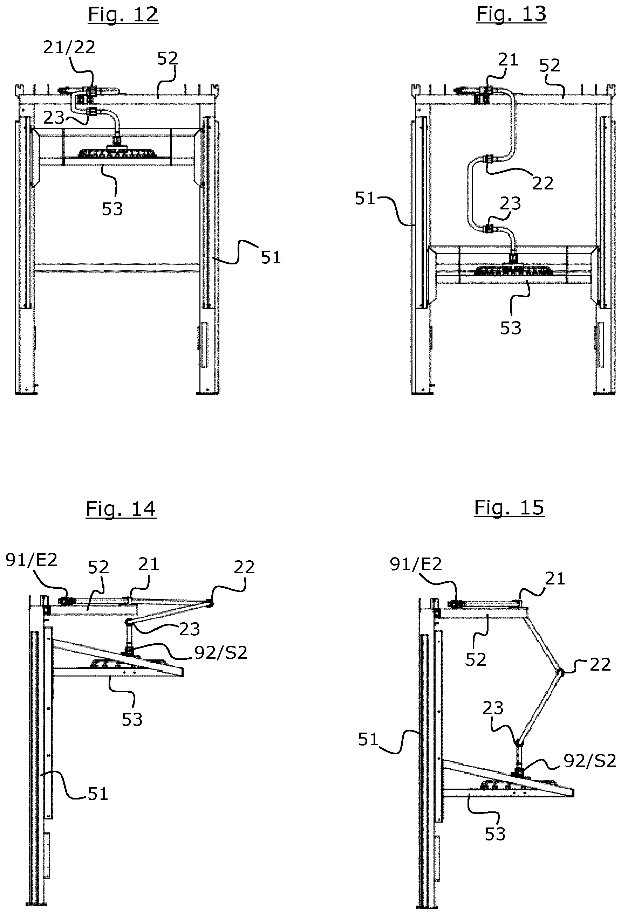

Le dispositif 2 selon l'invention est destiné à raccorder une borne de distribution 91 de fluide et une borne de remplissage 92 (figures 14 et 15).

Le dispositif de raccordement 2 comprend une entrée E2 destinée à être connectée à une borne de distribution 91 et une sortie S2 destinée à être connectée à une borne de remplissage 92.

Dans le deuxième système de remplissage, le dispositif de raccordement 2 raccorde :
- d'une part, à la borne de distribution 91 par son entrée E2. La borne de distribution 91 consiste en une sortie d'un réseau de distribution (non représenté). La borne de distribution 91 est fixe relativement à un châssis 51, 52 et relativement au réseau de distribution (non représenté) ;
- d'autre part, à la borne de remplissage 92 par sa sortie S2. La borne de remplissage 92 est solidaire d'une rampe de remplissage 53. La rampe de remplissage 53 est mobile relativement au châssis 51, 52 et relativement au réseau de distribution (non représenté).

Le dispositif de raccordement 2 est agencé pour acheminer du fluide de la borne de distribution 91 à la borne de remplissage 92.

Dans cet exemple, le fluide est du gaz sous pression supérieure à 10 MPa, de préférence supérieure à 15 MPa.

Plus particulièrement, la borne de remplissage 92 est agencée pour remplir la rampe de remplissage 53. Au moins un récipient, dans cet exemple plusieurs bouteilles 59 sont placées dans une position fixe relativement au châssis 51, 52. La rampe de remplissage 53 est apte à être reliée à l'au moins un récipient 59 et apte à acheminer du fluide dans ledit au moins un récipient 59 depuis la borne de remplissage 92.

Cet agencement permet de remplir les bouteilles 59 avec le gaz acheminé par le dispositif de raccordement 2.

En référence à la figure 11, le dispositif de raccordement 2 comprend des conduits 201-204 de section circulaire.

Ces conduits 201-204 sont rigides.

La rigidité des conduits 201-204 peut être obtenue par leur fabrication dans un matériau métallique. On pourra par exemple utiliser de l'acier inoxydable austénitique, ou un alliage de cuivre, ou encore un alliage de nickel, typiquement Monel®.

Le dispositif de raccordement 2 comprend aussi des éléments de liaison 21-23, généralement au moins trois, agencés de sorte que chacun desdits éléments de liaison relie deux desdits conduits selon une liaison pivot ou rotule. Dans l'exemple de la figure 11, tous les éléments de liaison 21-23 forment chacun une liaison pivot.

On voit en figure 11 que le dispositif de raccordement 2 comprend un unique groupe de liaison, par comparaison avec le dispositif de raccordement 1 selon la première variante.

Dans la variante de la figure 11 :
- le dispositif de raccordement 2 comprend trois éléments de liaison 21-23 agencés de sorte que chacun desdits éléments de liaison relie deux desdits conduits 201-204 ;
- chacun des éléments de liaison 21-23 relie deux desdits conduits 201-204 selon une liaison pivot d'axe parallèle à l'axe de la liaison des autres éléments de liaison ; autrement dit, les axes D21, D22 et D23 des éléments de liaison 21, 22 et 23 respectivement sont parallèles entre eux, quelle que soit la position respective des éléments de liaison et des conduits.

De manière similaire à la première variante, dans le dispositif de raccordement 2 de la deuxième variante, chaque extrémité de conduit reliée à un élément de liaison peut s'étendre suivant une direction perpendiculaire à la direction suivant laquelle s'étend une partie centrale de ce conduit.

Dans l'exemple de la figure 11, les conduits 202 et 203 comprennent chacun deux extrémités qui s'étendent chacune suivant une direction parallèle l'une par rapport à l'autre, définissant un conduit en forme de « C » tel que précédemment décrit.

L'extrémité E2 du conduit 201, qui n'est pas reliée à un élément de liaison mais qui est destinée à être connectée à la borne d'alimentation 91, s'étend de préférence dans une direction (non représentée) parallèle à la direction dans laquelle s'étend la partie centrale de ce conduit 201. Cette extrémité E2 comporte un élément d'accouplement du dispositif 2 à la borne de distribution 91.

De même, l'extrémité S2 du conduit 204, qui n'est pas reliée à un élément de liaison mais qui est destinée à être connectée à la borne de remplissage 92, s'étend de préférence dans une direction (non représentée) parallèle à la direction dans laquelle s'étend la partie centrale de ce conduit 204. Cette extrémité S2 comporte un élément d'accouplement du dispositif 2 à la borne de remplissage 92.

Dans l'exemple qui vient d'être décrit, chacun des éléments de liaison 21-23 constitue une liaison pivot. Alternativement, chacun des éléments de liaison, ou une partie seulement d'entre eux, pourrait constituer une liaison rotule.

Les éléments de liaison 21-23 sont de préférence conformes à l'élément de liaison de la figure 3.

On va maintenant brièvement décrire un exemple de mise en oeuvre du dispositif de raccordement 2 de la figure 11 dans le deuxième système de remplissage selon les figures 10 et 12-15.

Typiquement, le dispositif de raccordement 2 reste raccordé aux bornes de distribution 91 et de remplissage 92 entre différentes utilisations du deuxième système de remplissage.

Après placement des bouteilles 59, la position de la rampe de remplissage 53 est ajustée relativement au châssis 51, 52, afin de permettre de connecter la rampe de remplissage 53 aux bouteilles 59 avec les tuyaux souples 58.

En effet, la rampe de remplissage 53 est dans cet exemple mobile suivant un axe perpendiculaire à l'axe respectif défini par chacun des éléments de liaison 21-23 (axes D21-D23), quelle que soit la position respective des éléments de liaison 21-23 et des conduits 201-204.

Cet ajustement peut être réalisé en déplaçant manuellement la rampe de remplissage 53 qui coulisse sur un dispositif de glissière 51 du châssis.

Par exemple, si la rampe de remplissage 53 est initialement positionnée vers le haut tel qu'illustré aux figures 10, 12 et 14, cette position initiale ne permet pas de raccorder les tuyaux souples 58 aux bouteilles 59 (voir figure 10). En déplaçant la rampe 53 vers le bas pour placer le système dans la configuration illustrée aux figures 13 et 15, il devient possible de raccorder les tuyaux souples 58 aux bouteilles 59.

On achemine ensuite dans le dispositif 2 du fluide, typiquement et dans cet exemple du gaz sous pression supérieure à 10 MPa, de préférence supérieure à 15 MPa, afin de remplir les bouteilles 59, afin de remplir les bouteilles 59.

### Dimensions et structures des conduits et des éléments de liaison

Quelle que soit la variante de réalisation précédemment décrite, chaque conduit 101-106 ou 201-204 :
- est un conduit rigide. Un tel conduit rigide se distingue d'un tuyau souple en ce qu'il ne peut pas être déformé manuellement, et/ou en ce qu'il conserve à lui seul (sans aide extérieure d'un utilisateur ou d'une autre pièce ou couche) sa forme sous son propre poids quelle que soit son orientation ou sa position, contrairement au tuyau souple qui peut prendre une forme différente, notamment lors de sa mise en place dans une installation gazière ;
- est en métal. Par exemple, chaque conduit peut être composé 'acier inoxydable austénitique, ou d'alliage de cuivre, ou encore d'alliage de nickel, typiquement Monel® ;
- a une section circulaire ;
- a un diamètre extérieur supérieur ou égal à 6 mm, de préférence compris entre 9,52 et 26,67 mm ; on peut par exemple utiliser un tube 6x0,8 métrique ;
- a une épaisseur e supérieure ou égale à 0,7 mm de préférence comprise entre 1,65 et 5,56 mm, ladite épaisseur e étant définie non pas comme l'épaisseur totale du conduit mais comme l'épaisseur de la paroi formant le conduit ; cette épaisseur peut être éventuellement irrégulière mais sera de préférence toujours supérieure ou égale à 0,7 mm; on peut par exemple utiliser un tube 6,35x0,71 fractionnaire ;
- a un rapport e/d supérieur ou égal à 0,11, avec e l'épaisseur d'un conduit considéré et d le diamètre extérieur de ce même conduit ;
- est réalisé dans un matériau présentant un module d'élasticité supérieur ou égal à 90 GPa ;
- consiste en une pièce unique (et ne comprend donc pas par exemple de conduit tressé ou un assemblage d'anneaux), mais peut être ou ne pas être entouré ou accompagné d'autres pièces ou couches (comme une gaine d'isolation thermique).

Quelle que soit la variante de réalisation précédemment décrite, les éléments de liaison 11-15 ou 21-23 ont de préférence une section de passage de fluide équivalente à celle des conduits qu'ils reçoivent. Ces éléments de liaison peuvent être réalisés en acier inoxydable austénitique, ou en alliage de cuivre, ou encore en alliage de nickel, typiquement Monel®. On peut utiliser par exemple des éléments de liaison commercialisés par la société SISNOVAM sous la référence RA00 0473 ou RA00 0459.

L'étanchéité des éléments de liaison peut être assurée par des joints toriques en élastomère.

Bien sûr, l'invention n'est pas limitée aux exemples qui viennent d'être décrits et de nombreux aménagements peuvent être apportés à ces exemples sans sortir du cadre de l'invention.

Par exemple, le dispositif de raccordement selon la première et/ou deuxième variante peut comprendre des éléments de liaison conformes à l'élément de liaison de la figure 4, et les conduits peuvent dans ce cas ne comprendre aucun coude.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif de raccordement (1, 2) destiné à raccorder une borne de distribution (91) de fluide et une borne de remplissage (92), ce dispositif étant agencé pour acheminer du fluide de la borne de distribution (91) à la borne de remplissage (92), ce dispositif comprenant des conduits (101-106 ; 201-204) et au moins trois éléments de liaison (11-15 ; 21-23) agencés de sorte que chacun desdits éléments de liaison relie deux desdits conduits selon une liaison pivot ou rotule ; ledit dispositif étant agencé pour acheminer du fluide sous pression supérieure à 10 MPa.

2. Dispositif (1, 2) selon la revendication 1, **caractérisé en ce que** chacun desdits éléments de liaison (11-15 ; 21-23) constitue une liaison pivot.

3. Dispositif (1, 2) selon la revendication 1 ou 2, **caractérisé en ce que** les conduits (101-106 ; 201-204) sont en métal.

4. Dispositif (1, 2) selon l'une quelconque des revendications précédentes, **caractérisé en ce que** chaque conduit (101-106 ; 201-204) a une section circulaire.

5. Dispositif (1, 2) selon l'une quelconque des revendications précédentes, **caractérisé en ce que** chaque conduit a un diamètre extérieur supérieur ou égal à 6 mm.

6. Dispositif (1, 2) selon l'une quelconque des revendications précédentes, **caractérisé en ce que** chaque conduit a une épaisseur supérieure ou égale à 0,7 mm.

7. Dispositif (1, 2) selon l'une quelconque des revendications précédentes, **caractérisé en ce que** chaque conduit consiste en une pièce unique.

8. Dispositif (1) selon l'une quelconque des revendications précédentes, **caractérisé en ce qu'**il comprend au moins quatre éléments de liaison agencés de sorte que chacun desdits éléments de liaison relie deux desdits conduits, plus préférentiellement au moins cinq éléments de liaison agencés de sorte que chacun desdits éléments de liaison relie deux desdits conduits.

9. Dispositif (1) selon l'une quelconque des revendications précédentes, **caractérisé en ce qu'**il comprend, dans au moins une position des éléments de liaisons et des conduits :
- un premier groupe de liaison comprenant au moins un élément de liaison (13, 14), chaque élément de liaison dudit premier groupe reliant deux desdits conduits selon une liaison pivot d'axe parallèle à une première direction (D1) ;
- un deuxième groupe de liaison comprenant au moins deux éléments de liaison (11, 12, 15), chaque élément de liaison dudit deuxième groupe reliant deux desdits conduits selon une liaison pivot d'axe parallèle à une deuxième direction (D2),
la deuxième direction (D2) étant non parallèle à la première direction (D1), la deuxième direction (D2) étant de préférence orthogonale à la première direction (D1).

10. Dispositif (1) selon la revendication 9, **caractérisé en ce que**, dans au moins une position des éléments de liaisons et des conduits, le premier groupe de liaison comprend deux éléments de liaison (13, 14) reliant chacun deux desdits conduits (103-105) selon une liaison pivot d'axe parallèle à ladite première direction (D1) et **en ce que**, dans cette même position, le deuxième groupe de liaison comprend trois éléments de liaison (11, 12, 15) reliant chacun deux desdits conduits (101-103, 105, 106) selon une liaison pivot d'axe parallèle à ladite deuxième direction (D2).

11. Dispositif (1) selon la revendication 10, **caractérisé en ce qu'**il comprend respectivement, depuis une entrée (E1) destinée à être connectée à ladite borne de distribution (91) jusqu'à une sortie (S1) destinée à être connectée à ladite borne de remplissage (92) :
- un premier conduit (101) ; puis
- un premier élément de liaison (11) appartenant au deuxième groupe de liaison ; puis
- un deuxième conduit (102) ; puis
- un deuxième élément de liaison (12) appartenant au deuxième groupe de liaison ; puis
- un troisième conduit (103) ; puis
- un troisième élément de liaison (13) appartenant au premier groupe de liaison ; puis
- un quatrième conduit (104) ; puis
- un quatrième élément de liaison (14) appartenant au premier groupe de liaison ; puis
- un cinquième conduit (105) ; puis
- un cinquième élément de liaison (15) appartenant au deuxième groupe de liaison ; puis
- un sixième conduit (106).

12. Dispositif (2) selon l'une quelconque des revendications 1 à 8, **caractérisé en ce qu'**il comprend trois éléments de liaison (21-23) agencés de sorte que chacun desdits éléments de liaison relie deux desdits conduits (201-204).

13. Dispositif (2) selon l'une quelconque des revendications 1 à 8 ou selon la revendication 12, **caractérisé en ce que** chacun des éléments de liaison (21-23) relie deux desdits conduits (201-204) selon une liaison pivot d'axe parallèle à l'axe de la liaison des autres éléments de liaison.

14. Dispositif (2) selon l'une quelconque des revendications 1 à 8 ou selon la revendication 12 ou 13, **caractérisé en ce qu'**il comprend une rampe de remplissage (53) apte à être reliée à au moins un récipient (59) et apte à acheminer du fluide dans ledit au moins un récipient (59) depuis la borne de remplissage (92), et **en ce que** la borne de remplissage (92) est solidaire de la rampe de remplissage (53).

15. Dispositif (2) selon la revendication 14, **caractérisé en ce que** la rampe de remplissage (53) est mobile suivant un axe perpendiculaire à l'axe respectif défini par chacun des éléments de liaison (21-23).

16. Dispositif (1, 2) selon l'une quelconque des revendications précédentes, **caractérisé en ce que** chaque conduit (101-106 ; 201-204) comprend deux extrémités (X1, X2) et une partie centrale (C1), et **en ce que**, pour chacun des conduits (101-106 ; 201-204), chaque extrémité (X1, X2) reliée à un élément de liaison (11-15 ; 21-23) s'étend suivant une direction (D5, D6) perpendiculaire à la direction (D4) suivant laquelle s'étend la partie centrale (C1).

17. Dispositif (1, 2) selon l'une quelconque des revendications précédentes, **caractérisé en ce que** le fluide est du gaz.

18. Procédé d'utilisation d'un dispositif (1, 2) selon l'une quelconque des revendications précédentes, **caractérisé en ce qu'**il comprend une étape dans laquelle on achemine dans ce dispositif du fluide, ledit fluide acheminé étant sous pression supérieure à 10 MPa.

19. Procédé selon la revendication 18, **caractérisé en ce que** le fluide acheminé est sous une pression de préférence supérieure à 15 MPa.

20. Procédé selon la revendication 18 ou 19, **caractérisé en ce que** le fluide est du gaz.

21. Procédé selon l'une quelconque des revendications 18 à 20, dans lequel on remplit au moins un récipient (49, 59) avec le fluide acheminé dans le dispositif (1, 2) selon l'une quelconque des revendications 1 à 17.
